# EUROPEAN PATENT APPLICATION

(11) **EP 4 528 112 A1**
(43) Date of publication of application: **26.03.2025**
(21) Application number: 23842675.3
(22) Date of filing: 18.05.2023
(51) Int. Cl.: F15B 11/00, F15B 21/14

(54) **HYDRAULIC DEVICE**

(30) Priority: 21.07.2022 JP 2022116689
(71) Applicant: DAIKIN INDUSTRIES, LTD., Osaka-shi, Osaka 530-0001 (JP)
(72) Inventor: KAMBAYASHI, Atsuhiro, Osaka-Shi, Osaka 530-0001 (JP)
(74) Representative: Goddar, Heinz J.
(86) International application number: PCT/JP2023/018632
(87) International publication number: WO 2024/018743

(57) **Abstract**

A hydraulic device includes: a relief valve (20) provided in a first oil flow path (L1) that guides hydraulic oil discharged from an actuator (10) to an oil tank (100), the relief valve (20) having a vent port (23); a hydraulic pump (31) having a discharge side connected to the vent port (23); a motor (41) that drives the hydraulic pump (31); a hydraulic motor (32) provided in the first oil flow path (L1) and located downstream of the relief valve (20); a generator (42) that is driven by the hydraulic motor (32); and a pressure control valve (50) that controls pressure of the hydraulic oil between the relief valve (20) and the hydraulic motor (32) to a predetermined pressure or less.

## Description

### TECHNICAL FIELD

The present disclosure relates to a hydraulic device.

### BACKGROUND ART

A hydraulic device in the related art includes a relief valve that causes hydraulic oil discharged from a hydraulic cylinder to return to an oil tank, and a hydraulic pump having a discharge side connected to a vent port of the relief valve (see, for example, JP 2020-171959 A (Patent Literature 1)).

It is possible for the hydraulic device having the above configuration to control a set pressure of the relief valve by controlling a vent pressure of the relief valve using pressure of the hydraulic oil discharged from the hydraulic pump.

### CITATION LIST

### PATENT LITERATURE

Patent Literature 1: JP 2020-171959 A

### SUMMARY OF INVENTION

### TECHNICAL PROBLEMS

In the above-described hydraulic device in the related art, when the hydraulic oil is discharged from the hydraulic cylinder, the energy of the hydraulic oil has been completely converted into heat, and thus there is room for improvement in energy saving performance.

It is therefore an object of the present disclosure to provide a hydraulic device capable of improving energy saving performance.

### SOLUTIONS TO PROBLEMS

A hydraulic device of a first aspect of the present disclosure includes: a relief valve provided in a first oil flow path that guides hydraulic oil discharged from an actuator to an oil tank, the relief valve having a vent port; a hydraulic pump having a discharge side connected to the vent port; a motor that drives the hydraulic pump; a hydraulic motor provided in the first oil flow path and located downstream of the relief valve; a generator that is driven by the hydraulic motor; and a pressure control valve that controls pressure of the hydraulic oil between the relief valve and the hydraulic motor to a predetermined pressure or less.

With the above configuration, the relief valve and the hydraulic motor are provided in the first oil flow path. The hydraulic motor is located downstream of the relief valve and drives the generator. It is therefore possible to improve the energy conservation performance when the relief valve opens.

A hydraulic device of a second aspect of the present disclosure based on the hydraulic device of the first aspect further includes an accumulator connected between the relief valve and the hydraulic motor.

With the above configuration, connecting the accumulator between the relief valve and the hydraulic motor makes it possible to prevent, when the hydraulic oil flows from the relief valve to the hydraulic motor, sudden fluctuations in the pressure of the hydraulic oil.

**In** a hydraulic device of a third aspect of the present disclosure based on the hydraulic device of the second aspect, the first oil flow path is provided with a first check valve downstream of the relief valve and upstream of a point where the accumulator is connected, the first check valve being configured to allow the hydraulic oil to flow from the relief valve to the hydraulic motor.

With the above configuration, the first oil flow path is provided with the first check valve downstream of the relief valve and upstream of the point where the accumulator is connected. The first check valve allows the hydraulic oil to flow from the relief valve to the hydraulic motor. It is therefore possible to prevent, when the hydraulic oil flows from the accumulator to the hydraulic motor, a decrease in the flow rate of the hydraulic oil.

**In** a hydraulic device of a fourth aspect of the present disclosure based on the hydraulic device of any one of the first to third aspects, the oil tank is connected to the first oil flow path upstream of the relief valve via a second oil flow path, and the second oil flow path is provided with a second check valve that allows the hydraulic oil to flow from the oil tank to the actuator.

With the above configuration, the oil tank is connected to the first oil flow path upstream of the relief valve via the second oil flow path. It is therefore possible to supply the hydraulic oil from the oil tank to the actuator through the second oil flow path to prevent shortage of the hydraulic oil in the actuator.

In a hydraulic device of a fifth aspect of the present disclosure based on the hydraulic device of any one of the first to fourth aspects, the hydraulic motor includes a hydraulic pump motor that is connected to the actuator via a third oil flow path and supplies the hydraulic oil from the oil tank to the actuator.

With the above configuration, the hydraulic motor includes the hydraulic pump motor that supplies the hydraulic oil from the oil tank to the actuator. This eliminates the need to provide another hydraulic pump that supplies the hydraulic oil from the oil tank to the actuator. It is therefore possible to suppress an increase in size of the hydraulic device.

### BRIEF DESCRIPTION OF DRAWINGS

Fig. 1 is a schematic block diagram of a hydraulic device of a first embodiment of the present disclosure.
Fig. 2 is a graph for describing how the hydraulic device operates.
Fig. 3 is a schematic block diagram of a hydraulic device of a second embodiment of the present disclosure.
Fig. 4 is a schematic block diagram of a hydraulic device of a modification of the first embodiment of the present disclosure.
Fig. 5 is a schematic block diagram of a hydraulic device of a modification of the second embodiment of the present disclosure.

### DESCRIPTION OF EMBODIMENTS

Hereinafter, embodiments will be described. Note that, in the drawings, the same reference numerals represent the same or corresponding parts. In addition, the dimensions on the drawings, such as lengths, widths, thicknesses, and depths, are appropriately changed from actual scales for clarity and simplification of the drawings, and do not represent actual relative dimensions.

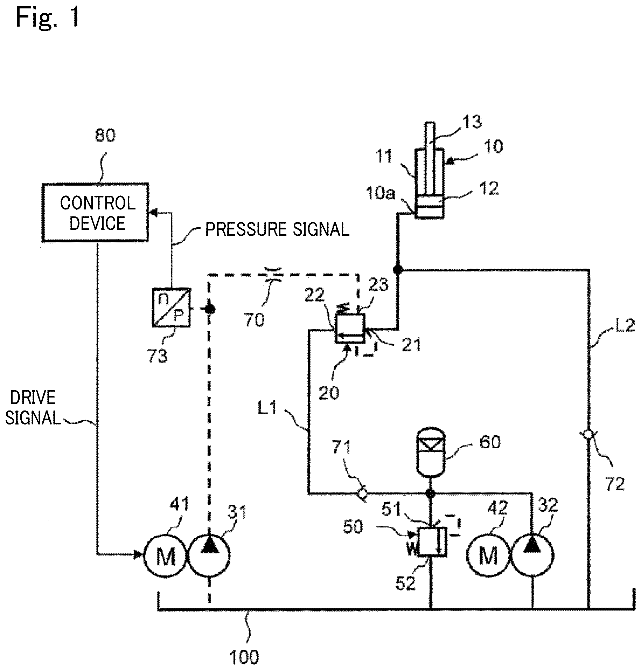

Fig. 1 is a schematic block diagram of a hydraulic device according to a first embodiment of the present disclosure. A hydraulic cylinder 10 of a press device supplies hydraulic oil to the hydraulic device according to the first embodiment. The press device is an example of a main machine.

The hydraulic device includes a first relief valve 20, a hydraulic pump 31, a first electric motor 41, a control device 80, a hydraulic motor 32, a second electric motor 42, and a second relief valve 50. The first relief valve 20 is provided in a first oil flow path L1 guiding the hydraulic oil discharged from the hydraulic cylinder 10 to an oil tank 100. The first electric motor 41 drives the hydraulic pump 31. The second electric motor 42 is driven by the hydraulic motor 32. Note that the hydraulic cylinder 10 is an example of an actuator. The first relief valve 20 is an example of a relief valve. The first electric motor 41 is an example of a motor. The second electric motor 42 is an example of a generator. The second relief valve 50 is an example of a pressure control valve.

The first relief valve 20 has an inlet port 21 and an outlet port 22, the inlet port 21 being connected to a port 10a of the hydraulic cylinder 10, the outlet port 22 being connected to an intake side of the hydraulic motor 32. The first relief valve 20 is a pilot-operated relief valve, and has a vent port (pilot port) 23.

The hydraulic cylinder 10 includes a cylinder tube 11, a piston 12 that reciprocates in the cylinder tube 11, and a piston rod 13. The piston rod 13 has one end connected to the piston 12.

The hydraulic pump 31 has a discharge side connected to the vent port 23 of the first relief valve 20. This configuration allows a discharge pressure (pilot pressure) of the hydraulic pump 31 to be supplied to the vent port 23 to control a set pressure the first relief valve 20. A throttle 70 is provided between the hydraulic pump 31 and the vent port 23 of the first relief valve 20. The throttle 70 regulates a flow rate of the hydraulic oil flowing to the vent port 23.

A pressure sensor 73 is connected to a vent line that guides the hydraulic oil discharged from the hydraulic pump 31 to the vent port 23 of the first relief valve 20. More specifically, a point where the pressure sensor 73 is connected to the vent line is set closer to the hydraulic pump 31 than the throttle 70. This setting is preferable from the viewpoint of improving the stability of open/close control of the first relief valve 20. The pressure sensor 73 detects pressure of the hydraulic oil between the hydraulic pump 31 and the throttle 70, and outputs a pressure signal indicating the pressure of the hydraulic oil to the control device 80.

The control device 80 controls the number of rotations of the hydraulic pump 31 (the speed of the hydraulic pump 31) by outputting a drive signal to the first electric motor 41. The control device 80 receives the pressure signal from the pressure sensor 73. When the pressure indicated by the pressure signal is higher than or equal to the set pressure of the first relief valve 20, the control device 80 controls the number of rotations of the hydraulic pump 31 to reduce the discharge pressure of the hydraulic pump 31, so as to open the first relief valve 20.

The hydraulic motor 32 is provided in the first oil flow path L1 and is located downstream of the first relief valve 20.

The second electric motor 42 is driven by the hydraulic motor 32 to generate electric power. At this time, the electricity regenerated by the second electric motor 42 is directly supplied to a press machine.

The second relief valve 50 is a safety valve that controls pressure of the hydraulic oil between the first relief valve 20 and the hydraulic motor 32 to a predetermined pressure (for example, the set pressure of the first relief valve 20) or less. The second relief valve 50 has an inlet port 51 and an outlet port 52, the inlet port 51 being connected between the first relief valve 20 and the hydraulic motor 32, the outlet port 52 being connected to the oil tank 100.

An accumulator 60 where the hydraulic oil is accumulated is connected between the first relief valve 20 and the hydraulic motor 32.

The first oil flow path L1 is provided with a first check valve 71 downstream of the first relief valve 20 and upstream of the point where the accumulator 60 is connected. The first check valve 71 allows the hydraulic oil to flow from the first relief valve 20 to the hydraulic motor 32. In other words, the first check valve 71 is provided in the first oil flow path L1 so as to prevent the hydraulic oil from flowing from the hydraulic motor 32 to the first relief valve 20.

The oil tank 100 is connected to a portion upstream of the first relief valve 20 in the first oil flow path L1 via a second oil flow path L2. The second oil flow path L2 is provided with a second check valve 72 that allows the hydraulic oil to flow from the oil tank 100 to the hydraulic cylinder 10. In other words, the second check valve 72 is provided in the second oil flow path L2 so as to prevent the hydraulic oil from flowing from the portion upstream of the first relief valve 20 in the first oil flow path L1 to the oil tank 100. In short, the second oil flow path L2 and the second check valve 72 are provided so as to allow the hydraulic oil to be supplied from the oil tank 100 to between the port 10a of the hydraulic cylinder 10 and the inlet port 21 of the first relief valve 20.

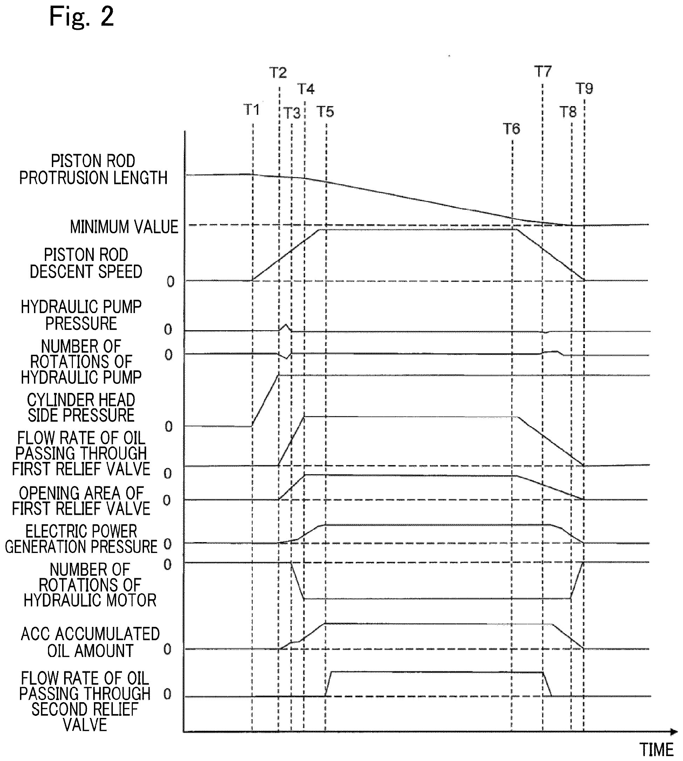

Fig. 2 is a graph for describing how the hydraulic device operates.

In the graph described above, a length of the piston rod 13 protruding from the cylinder tube 11 (described as "piston rod protrusion length" in Fig. 2) decreases over time from time T1 to time T9. In other words, the piston rod 13 starts to descend at time T1 and completes its descent at time T9. At this time, a descent speed of the piston rod 13 starts to increase at time T1, maintains the speed after reaching a certain speed, and starts to decrease shortly after time T6. Note that time T6 corresponds to timing when the piston 12 reaches the vicinity of a lower end of its travel range.

Pressure of the hydraulic oil between the port 10a of the hydraulic cylinder 10 and the inlet port 21 of the first relief valve 20 (described as "cylinder head side pressure" in Fig. 2) starts to increase at time T1 and reaches the set pressure of the first relief valve 20 at time T2. In response to this, the control device 80 outputs the drive signal to the first electric motor 41 to reduce the number of rotations of the hydraulic pump 31 to less than zero. This causes the hydraulic pump 31 to rotate backward to increase pressure on the oil tank 100 side of the hydraulic pump 31 (described as "hydraulic pump pressure" in Fig. 2). Accordingly, pressure of the vent port 23 of the first relief valve 20 decreases, and an opening area of the first relief valve 20 increases. At this time, the opening area of the first relief valve 20 increases over time from time T2. A flow rate of the hydraulic oil passing through the first relief valve 20 (described as "flow rate of oil passing through first relief valve" in Fig. 2) also increases over time from time T2. Thereafter, at time T4, the opening area of the first relief valve 20 is at its maximum, and the flow rate of the hydraulic oil passing through the first relief valve 20 becomes constant.

The hydraulic motor 32 rotates backward between time T3 (time after time T2 and before time T4) and time T9. In other words, the number of rotations of the hydraulic motor 32 is reversed during a period after time T3 and before the time T9. At this time, when the hydraulic motor 32 drives the second electric motor 42, the second electric motor 42 generates electricity. The amount of electric power generated by the second electric motor 42 starts to increase at time T3 and starts to decrease at time T8.

Pressure of the hydraulic oil supplied to the hydraulic motor 32 (described as "electric power generation pressure" in Fig. 2) starts to increase as the flow rate of the hydraulic oil passing through the first relief valve 20 starts to increase. At this time, when the pressure reaches the set pressure of the second relief valve 50 at time T5, the second relief valve 50 opens. Accordingly, a flow rate of the hydraulic oil passing through the second relief valve 50 (described "flow rate of oil passing through second relief valve" in Fig. 2) increases.

On the other hand, the pressure of the hydraulic oil supplied to the hydraulic motor 32 starts to decrease shortly after the start of a decrease in the flow rate of the hydraulic oil passing through the first relief valve 20. At this time, when the pressure becomes lower than the set pressure of the second relief valve 50 at time T7, the second relief valve 50 closes. Accordingly, the flow rate of the hydraulic oil passing through the second relief valve 50 decreases.

The amount of the hydraulic oil accumulated in the accumulator 60 (described as "ACC accumulated oil amount" in Fig. 2) also increases with the flow rate of the hydraulic oil passing through the first relief valve 20. The accumulation of the hydraulic oil in the accumulator 60 causes the hydraulic motor 32 to rotate backward after the first relief valve 20 opens.

After the second relief valve 50 closes, the hydraulic oil accumulated in the accumulator 60 decreases over time. At this time, the hydraulic oil flows out to between the first check valve 71 and the hydraulic motor 32.

In the hydraulic device having the above configuration, the hydraulic oil discharged from the hydraulic cylinder 10 is guided to the oil tank 100 through the first oil flow path L1. The first oil flow path L1 is provided with the first relief valve 20 and the hydraulic motor 32 located downstream of the first relief valve 20. With this configuration, when the first relief valve 20 opens, the hydraulic oil passes through the hydraulic motor 32. At this time, since the second electric motor 42 is driven by the hydraulic motor 32, the second electric motor 42 generates regenerative electric power. Therefore, the energy saving performance can be improved using the regenerative electric power.

Since the pressure of the hydraulic oil between the first relief valve 20 and the hydraulic motor 32 is controlled to be less than or equal to the predetermined pressure by the second relief valve 50, it is possible to prevent an adverse effect on the open/close control of the first relief valve 20.

When the pressure of the hydraulic oil detected by the pressure sensor 73 is higher than or equal to the set pressure of the first relief valve 20, the control device 80 controls the number of rotations of the hydraulic pump 31 to reduce the pressure of the vent port 23 of the first relief valve 20, so as to open the first relief valve 20. It is therefore possible to prevent a surge pressure from being generated from the hydraulic cylinder 10.

Since the accumulator 60 is connected between the first relief valve 20 and the hydraulic motor 32, the hydraulic oil flowing from the first relief valve 20 toward the hydraulic motor 32 can be accumulated in the accumulator 60, and the hydraulic oil can be supplied from the accumulator 60 to between the first relief valve 20 and the hydraulic motor 32. It is therefore possible to prevent sudden fluctuations in the pressure of the hydraulic oil between the first relief valve 20 and the hydraulic motor 32.

Since the first oil flow path L1 is provided with the first check valve 71 downstream of the first relief valve 20 and upstream of the point where the accumulator 60 is connected, the flow of the hydraulic oil from the point toward the first relief valve 20 is blocked. It is therefore possible to prevent, when the hydraulic oil flows from the accumulator 60 to the hydraulic motor 32, a decrease in the flow rate of the hydraulic oil.

The oil tank 100 is connected to the portion upstream of the first relief valve 20 in the first oil flow path L1 via the second oil flow path L2. Therefore, when the piston rod 13 is driven upward by another machine, the hydraulic oil is supplied from the oil tank 100 to the hydraulic cylinder 10, so that it is possible to prevent shortage of the hydraulic oil in the hydraulic cylinder 10.

Since the second oil flow path L2 is provided with the second check valve 72, the flow of the hydraulic oil from the portion upstream of the first relief valve 20 in the first oil flow path L1 toward the oil tank 100 is blocked. It is therefore possible to prevent, when the hydraulic oil is discharged from the hydraulic cylinder 10, the hydraulic oil from returning to the oil tank 100 through the second oil flow path L2 and prevent a decrease in the flow rate of the hydraulic oil flowing through the first oil flow path L1.

### [Second embodiment]

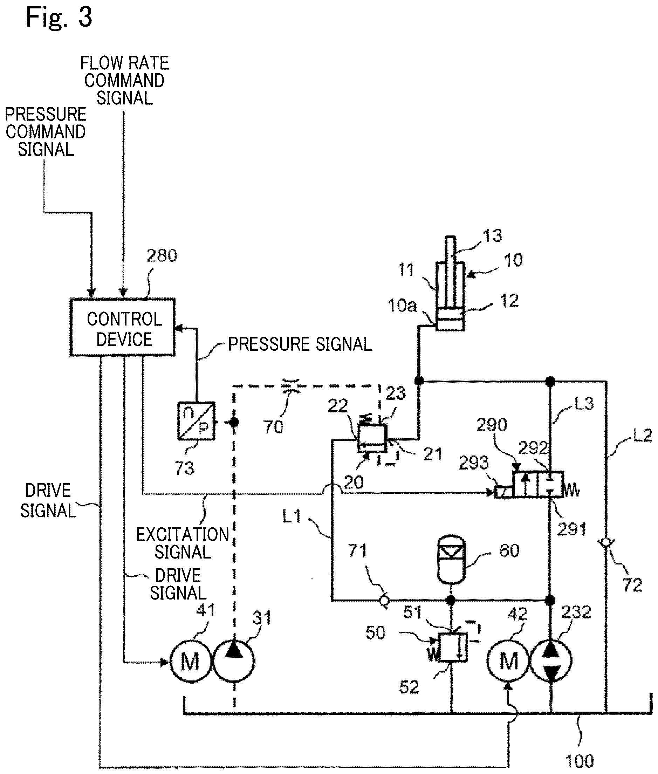

Fig. 3 is a schematic block diagram of a hydraulic device according to a second embodiment of the present disclosure.

The hydraulic device is the same in configuration as in the first embodiment except that the hydraulic device includes a hydraulic pump motor 232 and is capable of supplying hydraulic oil from the hydraulic pump motor 232 to the hydraulic cylinder 10. Note that the hydraulic pump motor is an example of a hydraulic motor.

More specifically, the hydraulic pump motor 232 is provided between the first check valve 71 and the oil tank 100 in the same manner as the hydraulic motor 32 according to the first embodiment. The hydraulic pump motor 232 is connected to the hydraulic cylinder 10 via a third oil flow path L3, and can supply the hydraulic oil from the oil tank 100 to the hydraulic cylinder 10.

The third oil flow path L3 is provided with an electromagnetic valve 290. The third oil flow path L3 has one end connected to the first oil flow path L1 at a portion closer to the hydraulic pump motor 232 than the first check valve 71. On the other hand, the third oil flow path L3 has the other end connected to the second oil flow path L2 at a portion closer to the hydraulic cylinder 10 than the second check valve 72.

In the electromagnetic valve 290, a solenoid 293 is excited upon receipt of an excitation signal from a control device 280. At this time, the electromagnetic valve 290 switches to the left position to cause a first port 291 to communicate with a second port 292. On the other hand, in the electromagnetic valve 290, the solenoid 293 is not excited when no excitation signal is input from the control device 280. At this time, the electromagnetic valve 290 switches to the right position to cause both the first port 291 and the second port 292 to close.

The control device 280 receives a pressure command signal and a flow rate command signal from the press device, receives the pressure signal from the pressure sensor 73, and outputs a drive signal for driving the second electric motor 42 to control the number of rotations of the hydraulic pump motor 232.

The control device 280 outputs a drive signal to the first electric motor 41 in the same manner as the control device 80.

The hydraulic device having the above configuration produces the same effects as produced by the hydraulic device according to the first embodiment.

Since the hydraulic device includes the hydraulic pump motor 232, there is no need to provide a hydraulic pump that supplies hydraulic oil from the oil tank 100 to the hydraulic cylinder 10, other than the hydraulic pump motor 232. It is therefore possible to suppress an increase in size of the hydraulic device.

In the first and second embodiments, the electricity generated by the second electric motor 42 is directly supplied to the press machine, but may be stored in a power storage device such as a capacitor.

In the first and second embodiments, the hydraulic device includes the accumulator 60, but need not necessarily include the accumulator 60.

In the first and second embodiments, an electromagnetic valve such as the electromagnetic valve 290 may be used instead of the second relief valve 50. In this case, a pressure sensor that detects the pressure on the downstream side of the first check valve 71 in the first oil flow path L1 may be provided, and the electromagnetic valve may be opened and closed on the basis of the pressure detected by the pressure sensor. Note that the electromagnetic valve is an example of the pressure control valve.

In the first and second embodiments, the hydraulic device may be used as a clutch brake device of a press machine, a die cushion device of a press machine, or the like.

In the first and second embodiments, the single-rod hydraulic cylinder is used as an example of the actuator, but a double-rod hydraulic cylinder, a hydraulic motor, or the like may be used.

In the first and second embodiments, the pressure sensor 73 is connected to the vent line at the point closer to the hydraulic pump 31 than the throttle 70, but the pressure sensor 73 may be connected to the vent line at a point closer to the relief valve 20 than the throttle 70.

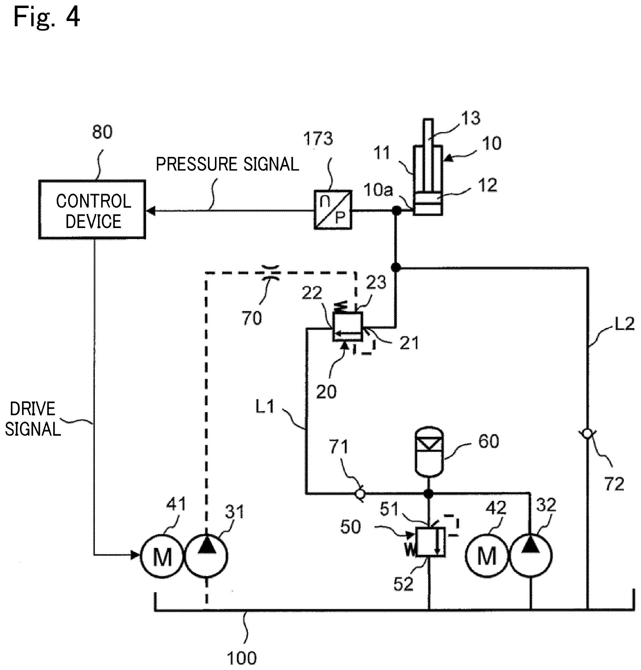

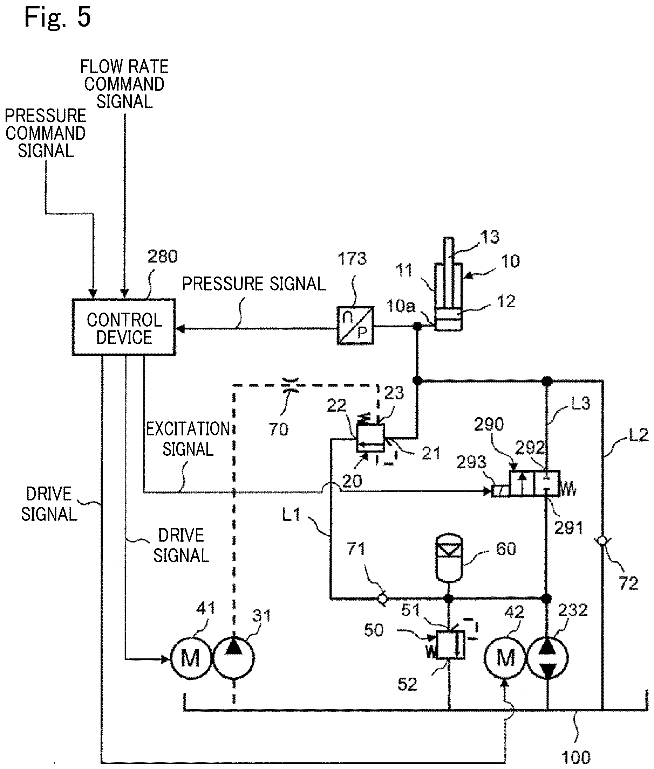

**In** the first and second embodiments, the pressure sensor 73 is connected to the vent line at the point closer to the hydraulic pump 31 than the throttle 70, but as illustrated in Figs. 4 and 5, a pressure sensor 173 connected to the upstream portion of the first oil flow path L1 may be used.

The pressure sensor 173 detects the pressure of the hydraulic oil between the port 10a of the hydraulic cylinder 10 and the inlet port 21 of the first relief valve 20, and outputs the pressure signal indicating the pressure of the hydraulic oil to the control device 80 or 280. When the pressure indicated by the pressure signal is higher than or equal to the set pressure of the first relief valve 20, the control device 80 or 280 controls the number of rotations of the hydraulic pump 31 to reduce the discharge pressure of the hydraulic pump 31, so as to open the first relief valve 20. As described above, even in a case where the pressure sensor 173 is used instead of the pressure sensor 73, the first relief valve 20 is opened under the same control as in the first and second embodiments.

**In** the second embodiment, the third oil flow path L3 is provided with the electromagnetic valve 290, but a check valve that allows the hydraulic oil to flow from the oil tank 100 to the hydraulic cylinder 10 may be provided.

The foregoing description concerns specific embodiments of the present disclosure; however, the present disclosure is not limited to the first and second embodiments, and various modifications and variations may be made within the scope of the present disclosure. For example, an appropriate combination of the configurations described in the first and second embodiments may be regarded as an embodiment of the present disclosure. In addition, an appropriate combination of a modification of one of the first and second embodiments and the other of the first and second embodiments may be used as an embodiment of the present disclosure.

### REFERENCE SIGNS LIST

- 10: Hydraulic cylinder
- 20: First relief valve
- 31: Hydraulic pump
- 41: First electric motor
- 32: Hydraulic motor
- 42: Second electric motor
- 50: Second relief valve
- 73, 173: Pressure sensor
- 60: Accumulator
- 71: First check valve
- 72: Second check valve
- 80, 280: Control device
- 90: Electromagnetic valve
- 100: Oil tank
- 232: Hydraulic pump motor
- L1: First oil flow path
- L2: Second oil flow path
- L3: Third oil flow path

## Claims

1. A hydraulic device comprising:
a relief valve (20) provided in a first oil flow path (L1) that guides hydraulic oil discharged from an actuator (10) to an oil tank (100), the relief valve (20) having a vent port (23);
a hydraulic pump (31) having a discharge side connected to the vent port (23);
a motor (41) that drives the hydraulic pump (31);
a hydraulic motor (32, 232) provided in the first oil flow path (L1) and located downstream of the relief valve (20);
a generator (42) that is driven by the hydraulic motor (32, 232); and
a pressure control valve (50) that controls pressure of the hydraulic oil between the relief valve (20) and the hydraulic motor (32, 232) to a predetermined pressure or less.

2. The hydraulic device according to claim 1, further comprising an accumulator (60) connected between the relief valve (20) and the hydraulic motor (32, 232).

3. The hydraulic device according to claim 2, wherein the first oil flow path (L1) is provided with a first check valve downstream of the relief valve (20) and upstream of a point where the accumulator (60) is connected, the first check valve being configured to allow the hydraulic oil to flow from the relief valve (20) to the hydraulic motor (32, 232).

4. The hydraulic device according to any one of claims 1 to 3, wherein
the oil tank (100) is connected to the first oil flow path (L1) upstream of the relief valve (20) via a second oil flow path (L2), and
the second oil flow path (L2) is provided with a second check valve (72) that allows the hydraulic oil to flow from the oil tank (100) to the actuator (10).

5. The hydraulic device according to any one of claims 1 to 4, wherein the hydraulic motor (232) is a hydraulic pump motor (232) that is connected to the actuator (10) via a third oil flow path (L3) and supplies the hydraulic oil from the oil tank (100) to the actuator (10).
